# EUROPEAN PATENT APPLICATION

(11) **EP 3 473 434 A1**
(43) Date of publication of application: **24.04.2019**
(21) Application number: 17812804.7
(22) Date of filing: 31.05.2017
(51) Int. Cl.: B32B 15/00, B32B 15/01

(54) **METHOD FOR PRODUCING A HIGH RESISTANCE COMPOSITE PANEL, INSTALLATION AND PANEL OBTAINED**

(30) Priority: 15.06.2016 ES 201630816
(71) Applicant: Alucoil S.A., 09200 Miranda de Ebro (ES)
(72) Inventor: GONZALEZ SOLER, Clemente, 09200 Miranda de Ebro (Burgos) (ES)
(74) Representative: Elosegui de la Pena, Inigo
(86) International application number: PCT/ES2017/070378
(87) International publication number: WO 2017/216403

(57) **Abstract**

The invention focuses on the obtainment of a highly resistant composite panel based on two outermost aluminium or galvanized stainless steel sheets and a core, also made of aluminium or galvanized stainless steel, having a structure that makes it much cheaper than conventional panels with a honeycomb core and that also allows manufacturing by continuous process, allowing the product to be cut to different sizes with a single installation, optimising its efficiency. The panel obtained will have a core (5) with a buttoned structure, wherein a matrix of elements distributed in a herringbone manner having an essentially truncated cone-shaped configuration with a slightly curved generatrix is defined, which ensures high resistance in all directions, as opposed to cheaper existing panels having a core with an undulating profile and which do not adequately bear certain kinds of horizontal stress.

## Description

The present invention relates to a method for obtaining a highly resistant composite panel manufactured by continuous processing, thereby obtaining high versatility for a single installation for obtaining different-sized panels in accordance with the specific needs of each case.

Another object of the invention is to provide a highly resistant and low-cost composite panel with high resistance to fire.

The invention falls within the field of the highly resistant composite panel industry preferably made of aluminium, although other metals or alloys would be equally applicable without affecting the essence of the invention.

In the scope of the practical application of the invention, aluminium-based highly resistant composite panels are known wherein a central core and two external layers are defined, materialised in corresponding aluminium sheets which are fixed by means of adhesive to said central core, also obtained from aluminium and which is materialised in a honeycomb structure that makes it possible to increase panel thickness, conferring high resistance thereto, without significantly increasing its weight.

Although these types of panels satisfactorily fulfil the function for which they were envisaged, the reality is that the manufacturing process thereof is extremely expensive, such that when they are intended to cover large surfaces, such as building facades and similar, this cost increase problem is compounded by the negative effect it entails.

With the aim of overcoming this problem, patents EP 0939176 and EP 2993037 disclose sandwich-type aluminium panels that are much cheaper to obtain, wherein a pair of outermost sheets are defined wherebetween a core having an undulated profile is disposed, whether with a sine, trapezoidal, triangular or quadrangular configuration, that is fixed to said sheets by means of adhesive.

Although these types of panels bear stress in the main direction for which they have been envisaged, i.e. to bear vertical stress, they have great directionality, i.e. they do not adequately bear other stress in other directions, such as stress horizontal and perpendicular to the direction in which the undulated profile extends.

Further still, these types of panels are tailor-made, such that the outermost sheets and the core are manufactured separately, are cut-to-size and finally joined by means of adhesive, which complicates the installation when intending to obtain panels of very different sizes.

The method advocated solves the previously expounded problem in a fully satisfactory manner in each and every one of the aforementioned aspects, making it possible to obtain an inexpensive panel that is highly resistant in any direction and is manufactured by continuous processing, and may be cut to the desired size during the final process of obtainment thereof, which substantially simplifies installation, in addition to conferring high versatility thereto.

To this end and more specifically, the process is based on an aluminium alloy adequately tempered for isotropic deep-drawing intended to obtain the panel core, which is assisted by an unwinder and a feeder that continuously feeds a press wherein corresponding male and female tools are established that generate a buttoned matrix with small deep drawings having an essentially truncated cone-shape configuration on the aluminium press with a slightly curved generatrix, conveniently distributed in a herringbone manner, in order to optimise the resistance of the panel to be obtained in all directions.

When the core exits the press it is made to pass through an adhesive application station both on its lower side and on its upper side.

Said station can be materialised in two possible manners. In a first variant of embodiment, the station has rollers on which the adhesive is applied in a liquid state, such that said rollers come into contact exclusively with the outermost surfaces which are defined on the upper side and on the lower side of the core when it exits the press, minimising the use of the adhesive, thereby increasing the resistance to fire of the final panel obtained.

In a second variant of embodiment, the adhesive is applied directly to the entire upper and lower surface of the core by means of respective heated rollers and by means of adhesive sheets fed through coils and which are heated by infrared emitters.

In any case, once the adhesive has been applied to both sides of the core, corresponding pre-treated aluminium sheets that will constitute the outermost layers of the panel are disposed thereon, which are also applied in a continuous manner, using respective applicator coils and cylinders, such that the inner side thereof comes into contact with the adhesive-coated areas of the core, adb the assembly is made to pass through an oven whereby the curing of the adhesive is ensured and, therefore, the perfect fixation of the outermost layers to the core, establishing a pressing and pulling mechanism at the exit of said oven for continuous feeding thereof to a shear, wherein the assembly obtained is finally cut to the size required at any given time, without need to have to make changes in the installation, whereupon the panels obtained are redirected to the corresponding stacker by means of a conveyor belt for packaging thereof.

In this manner, a highly resistant composite panel is obtained, based on two outermost aluminium sheets and a core also made of aluminium having a buttoned structure wherein a matrix of elements distributed in a herringbone manner and having an essentially truncated cone-shaped configuration with a slightly curved generatrix is defined which, given said configuration, allows it to resist major stress in all directions, as opposed to conventional low-cost panels and which, contrarily, has much lower manufacturing costs than the previously analysed panels with a honeycomb core.

Although the method and, consequently, the panel obtained has been described based on the use of aluminium sheets to obtain both the outer layers of the panel and its core, this process could also be carried out using galvanized stainless steel sheets, whether for one or more of the layers that participate therein, i.e. that a panel could be obtained wherein its three layers are made of steel, or intermediate combinations in accordance with the material used for each layers, without affecting the essence of the invention.

In order to complement the following description and with the aim of helping to better understand the characteristics of the invention, in accordance with a preferred practical embodiment thereof, said description is accompanied, as an integral part thereof, by a set of drawings where, in an illustrative and non-limiting manner, the following has been represented:
- fig. 1: shows a schematic view of an installation for obtaining a highly resistant composite panel manufactured in accordance with the object of the present invention; and
- fig. 2: shows a perspective view of the panel obtained with the installation of the preceding figure, with the upper sheet thereof partially sectioned in order to view the internal structure of the panel core.

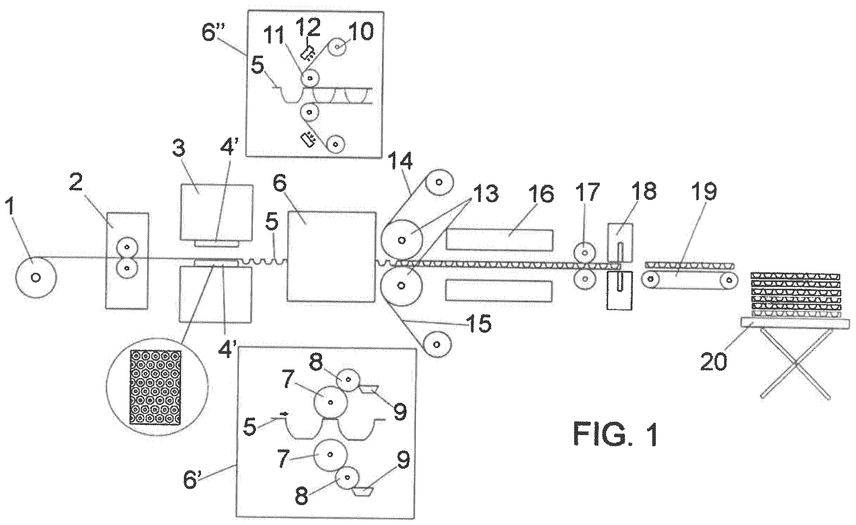

In view of the aforementioned figures, particularly figure 1, it can be observed how the installation of the invention is based on an aluminium coil having an adequate alloy and tempering for isotropic deep drawing from which the panel core will be obtained with a thickness comprised between 0.2 and 0.3 mm, associated with the corresponding unwinder (1), and that by means of a feeder (2) the aluminium or galvanized stainless steel sheet is made to pass through a press (3), wherein complementary male (4) and female (4') tools are established, that generate a buttoned matrix having small deep drawings with an essentially truncated cone-shaped configuration and a slightly curved generatrix on the press, conveniently distributed in a herringbone manner, defining a depth of between 3 and 8 mm for these deep drawings, wherein the major base has a diameter comprised between 8 and 12 mm and its minor base has a diameter comprised between 4 and 6 mm.

The press will have a useful width of between 1,600 and 1,700 mm, with an adjustable advance speed of approximately 10 to 26 m/min.

When the core (5) exits the press (3), it is made to pass through an adhesive application station (6) where adhesive is applied both to its lower side and upper side.

Said station (6) can be materialised in two possible ways.

In a first variant of embodiment, the station (6') has a kind of rollers (7) whereto the adhesive is applied in liquid state, such that said rollers (7) come into contact exclusively with the outermost surfaces (5') defined on the upper side and lower side of the core (5) upon exiting the press, minimising the use of adhesive and consequently increasing the resistance to fire of the final panel obtained, rollers (7) whereto the bicomponent polyurethane-type adhesive is applied using cuvettes (9) wherein second rollers (8) are partially submerged, which in turn come into contact with the surface of the rollers (7) .

In a second variant of embodiment, the station (6") consists of two unwinders of a polymer adhesive film (10) which is heated by means of infrared emitters (11) and is applied to the surface of the core (5) using heated rollers (12) by means of internal oil circuits.

After the adhesive application station (6), corresponding applicator cylinders (13) of the aluminium (14) and (15) or galvanized stainless steel sheets that will constitute the outermost layers of the final panel to be obtained are established, which can have the same or a different thickness, disposing these on the previously adhesive-coated sides of the core (5).

The tri-layer structure thus described is also made to pass, also continuously, through an oven (16) with a work surface of approximately 4 to 6 metres, applying a temperature comprised between 65°C and 70°C to the assembly in the case of the liquid adhesive and between 170°C and 180°C in the case of the film adhesive.

This process causes the three layers of the panel to be strongly fixed therebetween, establishing a pressing and pulling mechanism (17) at the exit of said oven (16) that makes it possible to continuously feed a movable shear (18), whereby the panels are cut to the size required at any given time, without need to have to make changes in the installation, whereupon the panels obtained are redirected through a conveyor belt (19) to the corresponding stacker (20) for packaging and distribution thereof.

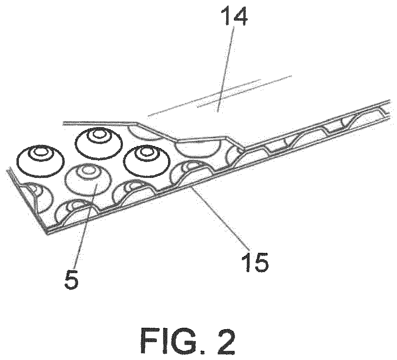

In this manner, and in accordance with figure 2, a highly resistant, low-cost composite panel is achieved consisting of two outermost aluminium sheets (14-15) and a core (5) also made of aluminium having a buttoned structure, wherein a matrix of elements distributed in a herringbone manner and having an essentially truncated cone-shaped configuration with a slightly curved generatrix is defined.

## Claims

1. A method for obtaining a highly resistant composite panel, **characterised in that** the following operating phases are established therein:
• Continuous feeding of a metallic sheet, preferably aluminium or galvanized stainless steel, to a press (2) .
• Continuous pressing of the metallic sheet by means of tools that generate a buttoned matrix of small deep drawings therein, conveniently distributed in a herringbone manner, having an essentially truncated cone-shaped configuration with a slightly curved generatrix, thereby obtaining the panel core.
• Continuous application of adhesive to both sides of the core obtained.
• Continuous application on both sides of the core of respective metallic sheets, preferably aluminium or galvanized stainless steel, determining the outermost layers of the panel.
• Continuous curing of the adhesive by means of an oven.
• Continuous pressing and pulling of the product obtained.
• Cutting of the product obtained to the required size.
• Stacking and storage of the product.

2. An installation for obtaining a highly resistant composite panel, **characterised in that** an unwinder (1) of an aluminium or galvanized stainless steel sheet participates therein, and that by means of a feeder (2) is made to pass through a press (3), wherein complementary male (4) and female (4') tools are established, which generate a buttoned matrix of small deep drawings on the press having an essentially truncated cone-shaped configuration with a slightly curved generatrix, conveniently distributed in a herringbone manner, establishing an adhesive application station (6) at the exit of said press (3) for applying adhesive both to the lower side and upper side of the core (5) obtained at the exit of the press, having envisaged the establishment of corresponding applicator cylinders (13) of the aluminium (14) and (15) or galvanized stainless steel sheets on the upper and lower sides of the core (5) at the exit of the press, such that the assembly obtained is made to pass continuously through an oven (16), at the exit of which a pressing and pulling mechanism (17) is disposed which feeds a movable shear (18) for cutting the panels to size.

3. The installation for obtaining a highly resistant composite panel, according to claim 2, **characterised in that** a conveyor belt (19) is established at the exit of the shear (18) that feeds a stacker (20).

4. The installation for obtaining a highly resistant composite panel, according to claim 2, **characterised in that** the adhesive application station (6') has rollers (7) whereto the adhesive is applied in a liquid state, such that said rollers (7) come into contact exclusively with the outermost surfaces (5') that are defined on the upper side and lower side of the core (5) when it exits the press, rollers (7) whereto the adhesive is applied by means of cuvettes (9) wherein second rollers (8) are partially submerged, which in turn come into contact with the surface of the rollers (7).

5. The installation for obtaining a highly resistant composite panel, according to claim 2, **characterised in that** the adhesive application station (6'') has two unwinders of an adhesive film (10) which is heated by means of infrared emitters (11) and is applied to the surface of the core (5) by means of heated rollers (12).

6. A highly resistant panel, **characterised in that** it consists of two outermost layers made of aluminium or galvanized stainless steel (14-15), wherebetween an aluminium or galvanized stainless steel core (5) having a buttoned structure is established, wherein a matrix of elements distributed in a herringbone manner is defined, said elements having an essentially truncated cone-shaped configuration with a slightly curved generatrix.
